# FASCICULE DE BREVET EUROPEEN

(11) **EP 1 358 414 B1**
(45) Date de publication et mention de la délivrance du brevet: **30.05.2007**
(21) Numéro de dépôt: 02701338.2
(22) Date de dépôt: 29.01.2002
(51) Int. Cl.: F16K 1/226

(54) **ROBINET A MANCHETTE ENCLIQUETEE DANS LE CORPS**
KLAPPEGEHÄUSE MIT EINGERASTETER MANCHETTE
VALVE WITH SNAP-ON LINER IN THE BODY

(30) Priorité: 30.01.2001 FR 0101211
(43) Date de publication de la demande: 05.11.2003
(73) Titulaire: KSB S.A.S, 92230 Gennevilliers (FR)
(72) Inventeur: WATTIGNIER, Claude, F-33400 Talence (FR); COURCEL, Jean-Claude, F-33140 Villenave d'Ornon (FR); LARRIEU, Lucien, F-64220 St Jean Pied De Port (FR); OLIVIER, Philippe, F-33170 Gradignan (FR)
(74) Mandataire: Eidelsberg, Victor Albert
(86) Numéro de dépôt international: PCT/FR2002/000342
(87) Numéro de publication internationale: WO 2002/061311

(56) Documents cités:
- US-A- 3 215 400
- US-A- 4 006 882
- US-A- 4 133 513
- US-A- 4 653 724

## Description

La présente invention se rapporte aux robinets et plus particulièrement aux robinets à papillon munis d'une manchette dite enveloppante en élastomère. Une manchette enveloppante en élastomère est une manchette ayant la forme d'une bague qui est munie de deux ouvertures diamétralement opposées pour le passage de l'arbre de manoeuvre du papillon et de l'axe inférieur.

Un robinet de ce genre doit avoir une bonne étanchéité de sectionnement pour le fluide véhiculé (étanchéité amont/aval) et une étanchéité de l'intérieur vers l'extérieur tant à la jonction des brides de tuyauterie qu'aux passages d'arbre. On souhaite que la qualité de ces étanchéités perdure indépendamment des conditions de service auxquelles est soumis le robinet.

On connaît déjà un robinet dans lequel la manchette est vulcanisée directement, collée ou fixée par scellement dans le corps du robinet auquel elle se trouve ainsi liée définitivement. Dans le cas où la manchette est vulcanisée, le corps du robinet fait office de partie extérieure circonférentielle du moule lors de la fabrication. L'inconvénient de cette solution est l'impossibilité de remplacer la manchette en cas d'usure ou de détérioration consécutive, soit au cyclage du robinet, soit à la fermeture de l'obturateur sur des corps. étrangers véhiculés par le fluide. La maintenance sur site en est rendue problématique en raison des difficultés de remplacement. Il en va de même pour le robinet décrit dans le document US-A-4 006 882 qui divulgue les caractéristiques du préambule de la revendication 1 et dans lequel la manchette est retenue au corps par durcissement d'une résine époxy injectée entre eux.

Suivant une autre technique, la manchette est interchangeable. Elle peut être montée dans le corps et en être démontée. Cette solution nécessite un outillage complet de moulage pour la fabrication de cette pièce en élastomère. Elle présente l'avantage de rendre possible le remplacement de la manchette en tant que pièce d'usure.

Lorsque le papillon est fermé, le robinet comprend deux compartiments qui sont soumis à des pressions différentes. La manchette est alors soumise à des forces qui prennent naissance dans le compartiment soumis à la pression. La manchette est plaquée sur le corps dans ce compartiment, mais elle est également soumise à des forces axiales qui correspondent aux forces de pression appliquées en extrémité entre le diamètre intérieur du corps et le diamètre extérieur de l'obturateur. Ces forces chassent axialement la membrane.

Pour remédier à cet inconvénient, on a déjà prévu de munir la surface périphérique extérieure de la manchette de tenons qui pénètrent dans des gorges conjuguées du corps.

Malgré cela, on constate des ruptures prématurées de la manchette et des défauts d'étanchéité.

L'invention remédie à cet inconvénient par un robinet ayant une manchette qui assure une meilleure étanchéité et qui ne se déchire pas, tout en étant interchangeable.

L'invention a pour objet un robinet qui comprend une manchette en matière élastomère ayant la forme d'une bague ayant deux bords et une face extérieure, la bague étant munie de deux ouvertures diamétralement opposées et de plusieurs nervures à distance des bords sur sa face extérieure, un corps en une matière résistant à la pression et en le forme d'un anneau ayant une face intérieure, l'anneau étant muni de deux ouvertures diamétralement opposées et de plusieurs rainures circonférentielles dans lesquelles pénètrent respectivement les nervures, caractérisé en ce qu'au moins une nervure comporte un bec d'encliquetage de plus grande largeur que celle d'une partie de la rainure où elle pénètre et de plus grande largeur que celle d'une partie de la nervure reliant la bague au bec d'encliquetage et en ce que la manchette est encliquetée par sa au moins une nervure à bec d'encliquetage dans la rainure correspondante du corps.

De préférence chaque nervure comporte un bec d'encliquetage.

Ce bec d'encliquetage s'encliquète dans des rainures de forme conjuguée en forme de T sur la face intérieure du corps du robinet.

On a compris maintenant que, dans le compartiment non soumis à la pression, la manchette n'est plus plaquée sur le corps par la pression et il n'y a plus de forces de frottement au contact corps-mànchette qui s'opposent au déplacement axial. Grâce à l'encliquetage, on s'oppose efficacement à ce phénomène. Lorsque le papillon est entrouvert ou est ouvert, les lois de la mécanique des fluides sont telles que la pression statique le long d'une ligne de courant varie en sens inverse de la vitesse. Si la vitesse augmente le long d'une ligne de courant, la pression statique diminue et inversement si la vitesse diminue, la pression statique augmente. L'obstruction du papillon entraîne une grande augmentation locale de la vitesse et donc une grande chute de pression pouvant atteindre des valeurs négatives (dépression) qui tend à aspirer et à éloigner la manchette du corps. Là encore, l'encliquetage s'oppose efficacement à cet éloignement et permet de faire en sorte que la manchette ne se rompe pas comme c'était le cas lorsque le robinet était manoeuvré alors que la manchette était séparée du corps.

De préférence, le bec a une face d'appui sensiblement parallèle à la face extérieure et à une face supérieure inclinée faisant un angle avec la face d'appui qui est compris entre 20 et 90°. On assure ainsi un bon encliquetage avec cependant la possibilité d'un désencliquetage pour un démontage.

De préférence, les becs de deux nervures se trouvant de part et d'autre de la génératrice passant par les centres des ouvertures sont tournés l'un vers l'autre. L'encliquetage est plus efficace. Pour bien assurer l'encliquetage, la largeur de la face d'appui représente de préférence au moins le cinquième, et mieux au moins le quart, de la largeur du pied de la nervure et la hauteur du bec représente au moins le cinquième, et mieux au moins le quart, de la largeur du pied. On a obtenu de bons résultats lorsque la hauteur du pied est inférieure à 20 mm et supérieure à 1 mm.

Suivant un mode de réalisation préféré, la nervure a la forme d'un champignon ménageant deux becs par nervure.

Pour faciliter le moulage, il vaut mieux que les nervures cessent à proximité des ouvertures, par exemple sur une partie de circonférence de part et d'autre de chaque ouverture correspondant à 10 ou à 5° d'angle au centre.

Pour faciliter l'entrée des nervures dans les rainures, celles-ci ont de préférence des chanfreins d'entrée.

L'invention vise enfin un robinet ayant une manchette suivant l'invention placée dans un corps de robinet suivant l'invention, les becs d'encliquetage étant conjugués des rainures d'encliquetage en forme de T.

Au dessin annexé, donné uniquement à titre d'exemple :
la figure 1 est une vue en perspective éclatée avec coupe partielle d'un corps de robinet et d'une manchette,
la figure 2 est une vue en coupe à échelle suivant un plan passant par l'axe du robinet d'un mode de réalisation, et
la figure 3 est une vue analogue à la figure 2 d'un autre mode de réalisation.

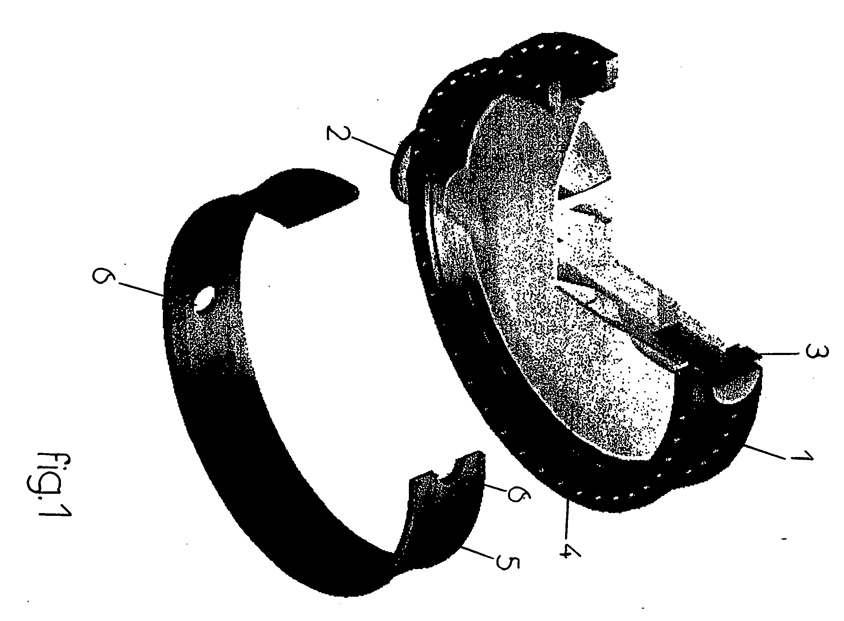

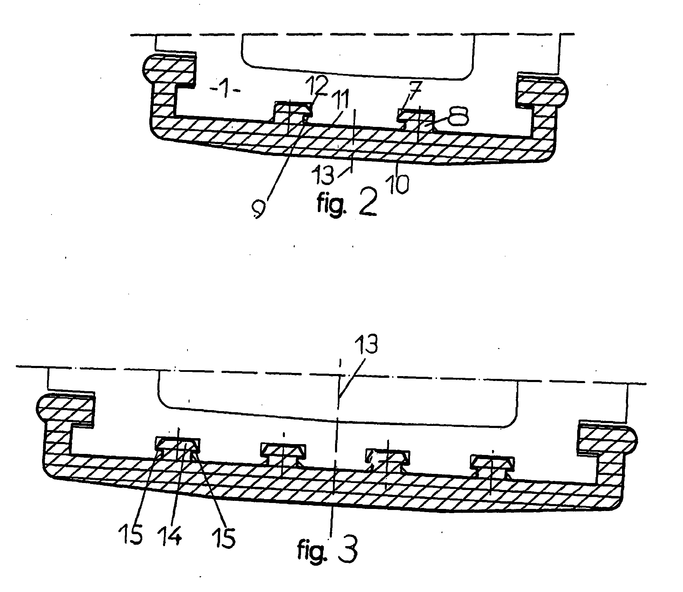

Le robinet illustré à la figure 1 comporte un corps 1 métallique ayant la forme d'un anneau et muni de deux ouvertures 2 diamétralement opposées et sur la face intérieure de plusieurs rainures circonférentielles. Dans les ouvertures 2 passent un arbre 3 dont est solidaire en rotation un papillon 4 qui peut ainsi tourner d'un quart de tour et dégager l'ouverture du corps 1 ou l'obturer. Sur la face intérieure du corps 1 est encliquetée, comme le montrent les figures 2 et 3, une manchette 5 en élastomère ayant la forme d'une bague et munie de deux ouvertures 6 diamétralement opposées et de plusieurs nervures 8 circonférentielles sur la face extérieure à distance des bords.

A la figure 2, le corps 1 comporte deux rainures 7 en forme de T et la manchette comporte deux nervures 8 également en forme de T, chacune comportant un pied moins large que l'embouchure de la rainure 7 surmonté d'un bec plus large que le pied et plus large que l'embouchure de la rainure 7. Le bec comprend une face 9 d'appui parallèle à la face intérieure 10 de la manchette ainsi qu'à sa face 11 extérieure et une face 12 supérieure, inclinée faisant un angle de 45° avec la face 9 d'appui, le bec de la nervure se trouvant d'un côté de la génératrice 13 passant par le centre des ouvertures 6 est dirigé vers le bec de la nervure se trouvant de l'autre côté de la génératrice 13.

A la figure 3, les nervures sont au nombre de quatre réparties symétriquement par rapport à la génératrice 13 passant par les ouvertures 2 et 6. Chaque nervure a la forme d'un champignon 14 ménageant deux becs 15 par nervure.

## Revendications

1. Robinet qui comprend
- une manchette en matière élastomère ayant la forme d'une bague (5) ayant deux bords et une face extérieure (11), la bague (5) étant munie de deux ouvertures (6) diamétralement opposées et de plusieurs nervures (8) à distance des bords sur sa face extérieure (11),
- un corps en une matière résistant à la pression et en la forme d'un anneau (1) ayant une face intérieure, l'anneau (1) étant muni de deux ouvertures (2) diamétralement opposées et de plusieurs rainures (7) circonférentielles dans lesquelles pénètrent respectivement les nervures (8),
**caractérisé en ce qu'**au moins une nervure (8) comporte un bec d'encliquetage (9,12) de plus grande largeur que celle d'une partie de la rainure (7) où elle pénètre et de plus grande largeur que celle d'une partie de la nervure (8) reliant la bague (5) au bec d'encliquetage (9,12), et **en ce que** la manchette est encliquetée par sa au moins une nervure (8) à bec d'encliquetage (9,12) dans la rainure (7) correspondante du corps.

2. Robinet suivant la revendication 1, **caractérisé en ce que** les rainures (7) sont en forme de T.

3. Robinet suivant la revendication 1, **caractérisé en ce que** les rainures 7 sont en forme de chapeau.

4. Robinet suivant la revendication 1, **caractérisé en ce que** le bec d'encliquetage a une face supérieure inclinée 12 faisant un angle avec une face d'appui (9) compris entre 20 et 90°.

5. Robinet suivant la revendication 1, **caractérisé en ce que** les becs d'encliquetage (9,12) des nervures (8) se trouvant d'un côté de la génératrice (13) passant par le centre des ouvertures (6, 6) de la bague (5) sont dirigés vers les becs d'encliquetage (9,12) des nervures (8) se trouvant de l'autre côté de la génératrice (13).

6. Robinet suivant la, revendication 2, **caractérisé en ce que** chaque nervure (8) à un pied, la largeur d'une face d'appui (9) représente au moins le cinquième de la largeur du pied de la nervure (8), et la hauteur du bec d'encliquetage (9,12) représente au moins le cinquième de la largeur du pied.

7. Robinet suivant la revendication 6, **caractérisé en ce que** la hauteur du pied est inférieure à 20 mm et supérieure à 1 mm.

8. Robinet suivant la revendication 1, **caractérisé en ce que** la nervure (8) a la forme d'un champignon (14) ménageant deux becs d'encliquetage (15) par nervure.

9. Robinet suivant la revendication 1, **caractérisé en ce que** les nervures (8) cessent à proximité des ouvertures (6,6) de la bague (5).

10. Robinet suivant la revendication 1, **caractérisé en ce que** les rainures (7) ont des chanfreins d'entrée.

## Claims

1. Valve which comprises
- a collar made of elastomer material in the form of a ring (5), with two edges and an outer surface (11), the ring (5) being provided with two diametrically opposed apertures (6) and a plurality of ribs (8) spaced from the edges on its outer surface (11):
- a body made of material which is resistant to pressure and is in the form of a ring (1) with an inner surface, the ring (1) being provided with two diametrically opposed apertures (2) and a plurality of circumferential grooves (7) in which the ribs (8) penetrate respectively;
**characterised in that** at least one rib (8) comprises a locking nose (9, 12) with a width which is greater than that of a part of the groove (7) in which it penetrates, and greater than that of a part of the rib (8) which connects the ring (5) to the locking nose (9, 12), and **in that** the collar is locked by its at least one rib (8) with a locking nose (9, 12) into the corresponding groove (7) in the body.

2. Valve according to claim 1, **characterised in that** the grooves (7) are in the shape of a "T".

3. Valve according to claim 1, **characterised in that** the grooves (7) are in the form of a cap.

4. Valve according to claim 1, **characterised in that** the locking nose has an inclined upper surface (12) which forms an angle of between 20 and 90° relative to a support surface (9).

5. Valve according to claim 1, **characterised in that** the locking noses (99, 12) of the ribs (8) which are on a side of the generatrix (13) which passes via the centre of the apertures (6, 6) in the ring (5) face the locking noses (9, 12) of the ribs (8) which are on the other side of the generatrix (13).

6. Valve according to claim 2, **characterised in that** each rib (8) has a foot, the width of a support surface (9) represents at least a fifth of the width of the foot of the rib (8), and the height of the locking nose (9, 12) represents at least a fifth of the width of the foot.

7. Valve according to claim 6, **characterised in that** the height of the foot is less than 20 mm and more than 1 mm.

8. Valve according to claim 1, **characterised in that** the rib (8) is in the form of a mushroom (14) which has two locking noses (15) per rib.

9. Valve according to claim 1, **characterised in that** the ribs (8) end in the vicinity of the apertures (6, 6) in the ring (5).

10. Valve according to claim 1, **characterised in that** the grooves (7) have entry chamfers.

## Patentansprüche

1. Ventil, enthaltend:
- eine Manschette aus elastomerem Material in Form eines Rings (5) mit zwei Rändern und einer Außenseite (11), wobei der Ring (5) mit zwei diametral gegenüberliegenden Öffnungen (6) und auf seiner Außenseite (11) mit Abstand von den Rändern mit mehreren Rippen (8) versehen ist,
- einen ringförmigen Körper (1) aus einem druckfesten Material, wobei der Ring (1) mit zwei diametral gegenüberliegenden Öffnungen (2) und mehreren Umfangsrillen (7) versehen ist, in welche jeweils die Rippen (8) greifen,
**dadurch gekennzeichnet, dass** mindestens eine Rippe (8) eine Rastnase (9,12) mit einer Breite aufweist, die größer ist als diejenige eines Teils der Rille, in den sie greift, und größer ist als diejenige eines Teils der Rippe (8), der den Ring (5) mit der Rastnase (9,12) verbindet, und dass dadurch die Manschette durch ihre mindestens eine mit Rastnase (9,12) versehene Rippe (8) in die entsprechende Rille (7) des Körpers einrastet.

2. Ventil nach Anspruch 1, **dadurch gekennzeichnet, dass** die Rillen (7) T-förmig sind.

3. Ventil nach Anspruch 1, **dadurch gekennzeichnet, dass** die Rillen (7) hutförmig sind.

4. Ventil nach Anspruch 1, **dadurch gekennzeichnet, dass** die Rastnase eine geneigte Oberseite (12) hat, die mit einer Auflagefläche (9) einen Winkel zwischen 20° und 90° bildet.

5. Ventil nach Anspruch 1, **dadurch gekennzeichnet, dass** die Rastnasen (9,12) der Rippen (8), die sich auf einer Seite der Mantellinie (13) befinden, die durch das Zentrum der Öffnungen (6, 6) des Rings (5) hindurchgeht, in Richtung der Rastnasen (9, 12) der Rippen gerichtet sind, die sich auf der anderen Seite der Mantellinie (13) befinden.

6. Ventil nach Anspruch 2, **dadurch gekennzeichnet, dass** jede Rippe (8) einen Fuß hat, wobei die Breite einer Auflagefläche (9) mindestens ein Fünftel der Breite des Fußes der Rippe (8) und die Höhe der Rastnase (9,12) mindestens ein Fünftel der Breite des Fußes beträgt.

7. Ventil nach Anspruch 6, **dadurch gekennzeichnet, dass** die Höhe des Fußes kleiner als 20mm und größer als 1mm ist.

8. Ventil nach Anspruch 1, **dadurch gekennzeichnet, dass** die Rippe (8) die Form eines Pilzes (14) mit der Anordnung von zwei Rastnasen (15) pro Rippe hat.

9. Ventil nach Anspruch 1, **dadurch gekennzeichnet, dass** die Rippen (8) in der Nähe der Öffnungen (6,6) des Rings (5) enden.

10. Ventil nach Anspruch 1, **dadurch gekennzeichnet, dass** die Rillen (7) Einführschrägen aufweisen.
